# EUROPÄISCHE PATENTANMELDUNG

(11) **EP 4 535 651 A1**
(43) Veröffentlichungstag der Anmeldung: **09.04.2025**
(21) Anmeldenummer: 23201960.4
(22) Anmeldetag: 05.10.2023
(51) Int. Cl.: H02S 20/10, H02S 40/10

(54) **BEWUCHSSCHUTZ, PHOTOVOLTAIKANLAGE UND ZUGEHÖRIGES MONTAGEVERFAHREN**

(71) Anmelder: Next2Sun Technology GmbH, 66763 Dillingen (DE)
(72) Erfinder: HILDEBRANDT, Heiko, 79110 Freiburg (DE); HOFF, Florian, 66709 Weiskirchen (DE); BENDIX, Peter, 79117 Freiburg (DE); SCHENIDER, Thomas, 66389 St. Ingbert (DE); OLLINGER, Stefan, 66663 Merzig (DE)
(74) Vertreter: Mertzlufft-Paufler, Cornelius

(57) **Zusammenfassung**

Zur vereinfachten Pflege einer Photovoltaik-Anlage (1) wird ein mehrteiliger Bewuchsschutz (5) vorgeschlagen, der nachträglich an Anlagenteilen der PV-Anlage (1), wie beispielsweise Pfosten (4) oder Kabeln, montiert werden kann, um diese Anlagenteile vor dem Einwirken eines Schneidwerkzeugs eines Mähwerkzeuges zu schützen und zudem vor dem Bewuchs von Pflanzen, die in unmittelbarer Nähe des Anlagenteils im Erdreich (17) nach oben wachsen. Der erfindungsgemäße Bewuchsschutz (5) kann dabei in einer für PV-Anlagen (1) optimierten Montage einfach an bestehenden PV-Anlagen (1) nachmontiert werden

## Beschreibung

Die Erfindung betrifft einen (mehrteiligen) Bewuchsschutz, der zum Abschirmen von Anlagenteilen wie beispielsweise vertikal verlaufenden Kabeln oder Pfosten einer Photovoltaikanlage vorgesehen ist und dazu eingesetzt werden kann. Insbesondere kann ein solcher Bewuchsschutz dazu dienen, die Pfosten einer Tragkonstruktion einer im freien Feld errichteten Photovoltaikanlage von Pflanzen abzuschirmen, die im Erdreich in der Nähe des Pfostens empor wachsen. Die Erfindung betrifft ferner eine zugehörige Photovoltaikanlage, sowie ein Verfahren zur Montage eines solchen mehrteiligen Bewuchsschutzes.

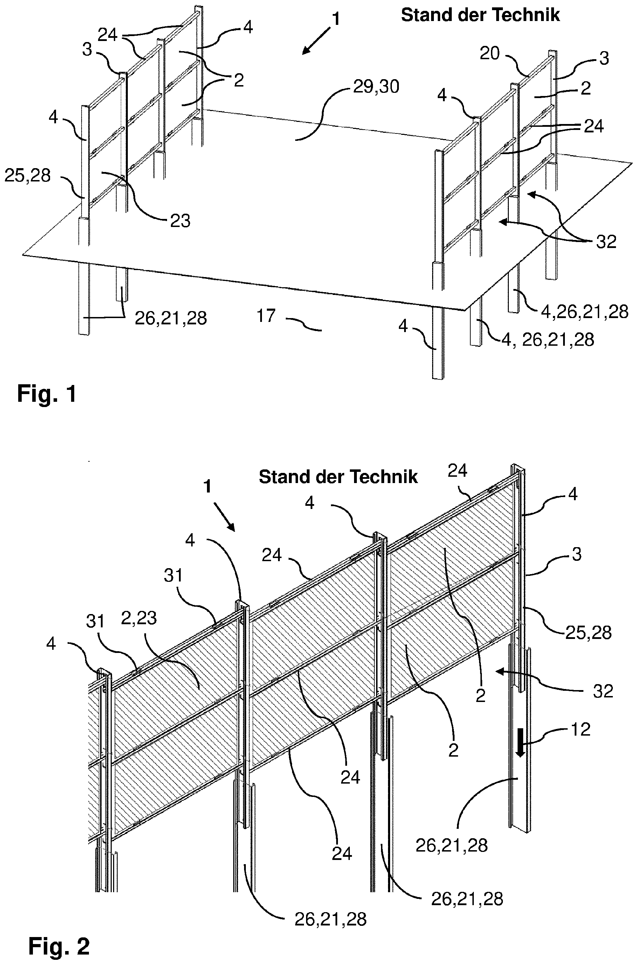

Im Stand der Technik werden bereits zur solaren Stromerzeugung Photovoltaik(PV)-Anlagen mit bifazialen PV-Modulen eingesetzt, die von beiden Seiten her Sonnenlicht empfangen und in elektrischen Solarstrom umwandeln können. Bei solchen PV-Anlagen, die im freien Feld, also beispielsweise auf einer landwirtschaftlich genutzten Wiese, aufgestellt werden, gibt es dann typischerweise mehrere voneinander beabstandete parallel verlaufende Reihen von vertikal übereinander angeordneten bifazialen PV-Modulen (Vgl. Figur 1). Die zugehörige Tragkonstruktion der PV-Anlage, die die PV-Module trägt, besteht dann oftmals aus vertikal verlaufenen Pfosten und horizontal verlaufenden Quer-Riegeln (Vgl. Figur 1).

Die Pfosten werden oftmals als Rammprofile mittels eines bestimmten metallischen Längsprofils ausgestaltet, welches in das Erdreich eingerammt wird, um den Pfosten im Erdreich zu befestigen. Sehr häufig werden dabei seitliche offene C-Längsprofile als Rammprofile eingesetzt, die also seitlich geöffnet sind, typischerweise in derjenigen Richtung, in welcher die Modulebene (= Ebene, in welcher die aktiven Flächen der PV-Module angeordnet sind) verläuft.

Beim Pflegen der PV-Anlage muss nun sichergestellt werden, dass der Bewuchs (Gräser, Sträucher und Hecken), der im Erdreich entsteht, nicht so weit anwächst, dass eine Verschattung der untersten Reihe an PV-Modulen stattfindet. Dies wird derzeit mit üblichen Freischneidern bewerkstelligt, die rotierende Schneidewerkzeuge aufweisen und mit denen der Freiraum zwischen den Pfosten und unterhalb der vertikal übereinander montierten PV-Module gemäht wird. Hierbei besteht einerseits die Gefahr, dass die Pfosten der Tragkonstruktion der PV-Anlage durch die Schneidwerkzeuge beschädigt werden; zudem ist es schwierig, Bewuchs zu stutzen, der beispielsweise im Innern des C-Profils entsteht und dort emporwächst. Eine vollständige Vermeidung einer Beschattung der PV-Module durch Bewuchs lässt sich daher derzeit oftmals nur mit hohem manuellen Arbeitsaufwand und damit mit hohen Kosten für die Pflege der PV-Anlage sicherstellen.

Vor diesem Hintergrund hat es sich die Erfindung zur Aufgabe gesetzt, die Pflege von Photovoltaik-Anlagen, die im freien Feld aufgestellt sind, zu vereinfachen. Insbesondere soll das Mähen mit größeren Mähgeräten sicher und einfach und damit schnell und kostengünstig erfolgen können und dabei soll sichergestellt werden, dass der gesamte Bewuchs in der Nähe der Pfosten der Tragkonstruktion effizient entfernt werden kann, sodass eine Verschattung der untersten Reihen der PV-Module vermieden werden kann, ohne dabei jedoch die Tragkonstruktion und/oder die eingesetzten Mähwerkzeuge übermäßig abzunutzen.

Zur Lösung dieser Aufgabe sind erfindungsgemäß bei einem mehrteiligen Bewuchsschutz die Merkmale von Anspruch 1 vorgesehen. Das erfindungsgemäße Konzept ist dabei nicht nur auf bifaziale PV-Anlagen, sondern auch auf konventionelle Photovoltaik-Anlagen anwendbar, die ebenfalls über Anlagenteile wie Kabel oder Pfosten verfügen, die im Erdreich verankert sind oder in vertikaler Richtung verlaufen und anfällig für einen Bewuchs sind.

Insbesondere wird somit erfindungsgemäß zur Lösung der Aufgabe bei einem Bewuchsschutz der eingangs genannten Art vorgeschlagen, dass der Bewuchsschutz ein erstes Teil und ein zweites Teil umfasst, die miteinander verbunden sind. Hierbei weist das erste Teil eine seitliche Öffnung auf, die mit dem zweiten Teil zumindest teilweise verschlossen werden kann und die quer zu einer Längsrichtung des Bewuchsschutzes orientiert ist. Das zweite Teil kann hingegen entlang der Längsrichtung des Bewuchsschutzes in das erste Teil eingeschoben und/oder auf das erste Teil aufgeschoben werden. Auf diese Weise kann eine Verbindung zwischen den beiden Teilen in einer finalen Montageposition des Bewuchsschutzes, zum Beispiel an einem Pfosten der erwähnten PV-Anlage, hergestellt werden.

Ein solcher Bewuchsschutz kann dazu eingesetzt werden, vertikal verlaufende Anlagenteile (wie beispielsweise Kabel oder Pfosten) einer PV-Anlage von Pflanzenbewuchs abzuschirmen. Dies wird nur erforderlich sein, wenn die PV-Anlagen im freien Feld, z.B. auf einer landwirtschaftlich genutzten Fläche, aufgestellt ist.

Vorteilhaft an einer solchen Ausgestaltung ist, dass das erste Teil quer zu einer Längsrichtung des Pfostens auf den Pfosten aufgeschoben werden kann, und dass anschließend, das zweite Teil mit dem ersten Teil verbunden werden kann (insbesondere um so eine umlaufende Außenwandung auszubilden), indem das zweite Teil in Längsrichtung des Pfostens (im freien Feld von oben nach unten) in das erste Teil eingeschoben und/oder auf das zweite Teil aufgeschoben werden kann. Auf diese Weise kann eine (unter Umständen auch wieder lösbare,) stabile mechanische Verbindung zwischen dem ersten und dem zweiten Teil hergestellt werden, die es ermöglicht, den Bewuchsschutz an bereits im Erdreich verankerten Pfosten oder an Kabeln einer Photovoltaikanlage nachzurüsten / zu montieren, um diese von einem Pflanzenbewuchs abzuschirmen. Die Verbindung kann dabei formschlüssig ausgestaltet sein, sodass in einer finalen Montageposition, in welcher die beiden Teile vollständig ineinander eingeschoben sind, sich die beiden Teile gegenseitig in Position halten in Bezug auf eine Richtung quer zu einer Einschubrichtung, in welcher das zweite Teil in das erste Teil eingeschoben wird.

In der finalen Montageposition am Pfosten kann der Bewuchsschutz den Pfosten bevorzugt ringförmig umgeben und somit nach allen Seiten hin abschirmen. In Längsrichtung/z-Richtung kann der Bewuchsschutz eine Mindestlänge bzw. -höhe von 10 cm aufweisen; die Höhe/Länge muss aber in der Regel nicht mehr als 40 cm betragen, sodass dann eine Lücke zwischen der unteren Kante der untersten Modul-Reihe der PV-Anlage und der Oberkante des Bewuchsschutzes bestehen kann. Denn beim Bearbeiten ist es ausreichend, den unteren erdnahen Abschnitt des Pfostens vor dem Schneidwerkzeug mithilfe des Bewuchsschutzes zu schützen. Der Bewuchsschutz kann somit auch als eine Art Schneidschutz verstanden werden, weil er den Pfosten vor einem Angriff des Schneidwerkzeugs schützt, welches beim Mähen des Zwischenraums zwischen zwei benachbarten Pfosten eingesetzt wird. Umgekehrt schützt der Bewuchsschutz aber auch das Schneidwerkzeug vor Schäden oder starkem Verschleiß, was durch Materialwahl (z.B. Kunststoff als weiches Material) und Formgebung (insb. abgerundete, konvexe Außenkonturen - also Vermeidung scharfer oder eckiger Kanten) des Bewuchsschutzes erreicht werden kann.

Erfindungsgemäß kann die Aufgabe auch durch weitere vorteilhafte Ausführungen gemäß den Unteransprüchen gelöst werden.

Beispielsweise kann vorgesehen sein, dass die beiden Teile lösbar und bevorzugt formschlüssig miteinander verbunden sind. Mit anderen Worten ist es bevorzugt, wenn das zweite Teil entgegen einer zweiten Montagerichtung aus dem ersten Teil herausgezogen und/oder abgezogen werden kann, denn so lässt sich bei Beschädigung des Bewuchsschutzes dieser sehr einfach austauschen. Ferner ist es bevorzugt, wenn in einer finalen Montageposition aufgrund des erwähnten Formschlusses das zweite Teil quer zu der zweiten Montagerichtung von dem ersten Teil in Position gehalten bleibt.

Bevorzugt bilden die beiden Teile in der Montageposition zum Beispiel an einem Pfosten, eine umlaufende Außenwandung des Bewuchsschutzes aus. Bei Montage des Bewuchsschutzes an einem Pfosten, kann also die Außenwandung um den Pfosten umlaufen. Hierbei ist es bevorzugt, wenn die Außenwandung geschlossen umlaufend und/ oder mit durchweg konvexer Form ausgestaltet ist. Dies kann insbesondere derart realisiert sein, dass in der finalen Montageposition, zum Beispiel an einem Pfosten, Pflanzen, die in unmittelbarer Nähe des Bewuchsschutzes empor wachsen, vollständig mithilfe eines Mähwerkzeugs entfernt werden können.

Die umlaufende Außenwandung führt einerseits zu einer verbesserten mechanischen Festigkeit des Bewuchsschutzes. Zum anderen kann so ein Bewuchs allseitig, und auch innerhalb des Bewuchsschutzes, verhindert werden, weil das Innere des Bewuchsschutzes so mit einem Schüttgut aufgefüllt werden kann, wie noch erläutert wird.

Der Vorteil einer konvexen Form der Außenwandung besteht insbesondere darin, dass damit ein Emporwachsen von Pflanzen wie z.B. einzelner Grashalme innerhalb einer Innenkontur des Bewuchsschutzes effektiv vermieden werden kann. Dieser Effekt ist ein wichtiger Motivationsgrund für das Anbringen des Bewuchsschutzes, denn durch die Verhinderung eines solchen Emporwachsens kann eine Verschattung der aktiven Flächen der PV-Anlage ohne größeren Aufwand beim Mähen verhindert werden.

Bei Einsatz in einer PV-Anlage ist es vorteilhaft, wenn der Bewuchsschutz in der Längsrichtung wenigstens 10 cm, bevorzugt sogar wenigstens 25 cm, hoch ist. Denn eine solche Länge ist vorteilhaft, um ein effizientes Mähen zu ermöglichen, ohne dabei den Pfosten zu beschädigen. Der Bewuchsschutz kann dabei in der Längsrichtung wenigstens so lang sein, als der Bewuchsschutz quer zur Längsrichtung breit ist.

Durch eine solche längliche Form kann sich der Bewuchsschutz eng an den Pfosten anschmiegen und eine ausreichende Länge des Pfostens in der Nähe des Erdreichs vor den Schneidwerkzeugen der Mähwerkzeuge schützen, mit denen der Bewuchs in der Nähe des Pfostens entfernt wird.

Das erste Teil und/oder das zweite Teil, kann/können eine (jeweilige) Aufnahme ausbilden, in die eine Einführnase des jeweils anderen Teils entlang der Längsrichtung einführbar ist. Hierdurch kann erreicht werden, dass die jeweilige Einführnase nach dem Einführen in seitlicher Richtung in der Aufnahme verankert ist und so ein Formschluss zwischen den beiden Teilen ausgebildet werden kann. Bevorzugt kann die Einführnase und/oder die Aufnahme einen nicht-eckigen, also beispielsweise einen abgerundeten Querschnitt zeigen. Denn so kann ein Verkanten beim Einführen vermieden werden. Das erste Teil des Bewuchsschutzes kann beispielsweise quer zu seiner Längsrichtung einen C-förmigen Querschnitt aufweisen mit zwei freien Enden. In einem solchen Fall kann das zweite Teil dann auf die beiden freien Enden aufgeschoben und/oder in diese eingeschoben werden.

In der finalen ersten Montageposition des ersten Teils können die beiden freien Enden über den Pfosten seitlich überstehen. Denn so kann das zweite Teil seitlich zum Pfosten angeordnet und parallel zur Längsachse des Pfostens entlang in das erste Teil eingeschoben und/oder auf das erste Teil aufgeschoben werden. Eine solche Ausgestaltung kann vor allem dann notwendig und hilfreich sein, wenn benachbarte Pfosten mit Querriegeln verbunden sind, weil so ein erforderlicher Freiheitsgrad geschaffen werden kann, der eine nachträgliche Montage des Bewuchsschutzes an bereits bestehenden PV-Anlagen wesentlich erleichtert.

Der Bewuchsschutz kann auch eine Kabelführung aufweisen oder ausbilden, die insbesondere als ein Kabelkanal ausgestaltet sein kann. Bevorzugt ist dabei die Kabelführung innerhalb der zuvor beschriebenen Außenwandung des Bewuchsschutzes angeordnet. Die Kabelführung/der Kabelkanal kann also insbesondere in einem Zwischenraum zwischen einem Pfosten und dem Bewuchsschutz angeordnet sein.

Auf diese Weise kann ein elektrisches Kabel der PV-Anlage in der Kabelführung geschützt innerhalb des Bewuchsschutzes entlang des Pfostens geführt werden/sein, wenn der Bewuchsschutz am Pfosten montiert ist. Die Kabelführung kann beispielsweise einstückig mit dem ersten oder zweiten Teil ausgestaltet sein oder aber als separates drittes Teil. Im letzteren Fall kann die separate Kabelführung beispielsweise mittels eine Clip-Mechanismus innenseitig an dem ersten und/oder zweiten Teil befestigbar sein oder beispielsweise ebenfalls in der Längsrichtung auf eine oder in eine entsprechende Aufnahme, angeordnet auf der Innenseite des ersten oder des zweiten Teils, auf-/eingeschoben werden. Ein solches axiales Einschieben der Kabelführung hat darüber hinaus den technischen Vorteil, dass so der Bewuchsschutz verstärkt wird, wodurch eine höhere mechanische Festigkeit resultiert, auch dann, wenn nur eine geringe Wandstärke verwendet wird. Die besagte Aufnahme kann, beispielsweise in Form einer Aufnahmerippe ausgestaltet sein; d.h. der Kabelkanal kann dann eine zu der Aufnahmerippe entsprechende Aufnahme aufweisen, die in axialer Richtung auf die Aufnahmerippe aufschiebbar ist. Auch der umgekehrte Fall ist eine mögliche Realisierung.

Der Bewuchsschutz kann auch wenigstens einen Abstandshalter aufweisen, bevorzugt sogar wenigstens zwei sich gegenüberliegende Abstandhalter. Ein solcher Abstandshalter kann in der finalen Montageposition, also beispielsweise am Pfosten einen Zwischenraum zwischen einer Innenwandung des Bewuchsschutzes und dem zu schützenden Anlagenteil/Pfosten definieren. Ferner kann ein solcher Abstandhalter einen Abstand zwischen der Innenwandung und dem zu schützenden Anlagenteil/Pfosten definieren.

Der Bewuchsschutz kann ferner einen wenigstens eine Befestigungsaufnahme aufweisen, in die ein Verankerungselement (welches insbesondere mehrteilig ausgestaltet sein kann), also beispielsweise ein Erdnagel oder ein Erdhering, insbesondere mit zugehörigem ersten Befestigungsteil, einführbar ist.

Eine bevorzugte Ausgestaltung sieht vor, dass der oder die Abstandshalter jeweils so elastisch ausgestaltet ist, dass beim Auffahren auf die Außenwandung des Bewuchsschutzes sich der Bewuchsschutz relativ zum im Erdreich verankerten Pfosten bewegen kann. Hierzu können die Abstandshalter beispielsweise durch elastische Polymerelemente gebildet sein. Auf diese Weise kann der Bewuchsschutz die Funktion eines Anfahrschutzes übernehmen und somit eine Beschädigung des Pfostens vermeiden, für den Fall, dass eine Mähmaschine versehentlich (seitlich) gegen den Bewuchsschutz auffährt.

Durch Einführen eines Verankerungselements in die besagte Befestigungsaufnahme, die beispielsweise in Form einer Öse ausgestaltet sein kann, lässt sich der Bewuchsschutz sicher im Erdreich verankern, wodurch die korrekte axiale Position des Bewuchsschutzes am bodenseitigen Ende des Pfosten und direkt über dem Erdreich gesichert werden kann. An der Befestigungsaufnahme kann aber auch zunächst ein erstes Befestigungsteil angebracht werden, an dem dann erst ein Verankerungselement angebracht wird. Mit anderen Worten kann das Verankerungselement somit mehrteilig ausgestaltet sein. Eine mehrteilige Ausgestaltung kann sinnvoll sein, weil die Aufnahme am Längsprofil (produktionsbedingt) oftmals nur über die ganze Länge ausgebildet werden kann, aber typischerweise nur am unteren Ende ein erstes Befestigungsteil für bspw. einen Erdnagel benötigt wird.

Zur Lösung der Aufgabe wird insbesondere eine Photovoltaikanlage gemäß Anspruch 9 vorgeschlagen. Diese weist mehrere PV-Module auf, die an einer Tragkonstruktion angeordnet sind. Hierbei weist die Tragkonstruktion Pfosten auf, die im Erdreich verankert sind. Erfindungsgemäß ist nun vorgesehen, dass an wenigstens einzelne der Pfosten jeweils ein Bewuchsschutz, wie er zuvor beschrieben wurde oder gemäß einem der auf einen Bewuchsschutz gerichteten Ansprüche montiert ist. Durch eine solche Ausgestaltung der PV- Anlage kann ein besonders kostengünstiger Betrieb gewährleistet werden, weil die Pflege der PV- Anlage wesentlich erleichtert wird.

Wie bereits erwähnt, ist es bevorzugt, wenn der Bewuchsschutz den Pfosten ringförmig und vollständig geschlossen umgibt und somit nach allen Seiten hin abschirmt. Der Bewuchsschutz wird dabei am unteren Ende des Pfostens knapp oberhalb des Erdreichs montiert, wobei die axiale Höhe von Pfosten zu Pfosten abweichen kann, je nach Verlauf des Geländes.

Die Pfosten können in an sich bekannter Weise in einen Befestigungsabschnitt, der im Erdreich verankert ist, und einen darüber liegenden Halteabschnitt aufgeteilt sein. Beide Abschnitte können jeweils in Form eines Längsprofils ausgestaltet sein. Der Befestigungsabschnitt kann bevorzugt als ein Rammprofil ausgestaltet sein, welches in das Erdreich eingerammt werden kann.

Es kann insbesondere vorgesehen sein, dass die seitliche Öffnung des ersten Teils so dimensioniert ist, dass das erste Teil quer zu einer Längsrichtung des jeweiligen Pfostens entlang einer ersten Montagerichtung auf den Pfosten bis in eine finale erste Montageposition aufgeschoben werden kann. Hierbei ist es bevorzugt, wenn eine Länge des ersten Teils so groß gewählt ist, dass das erste Teil in der finalen ersten Montageposition seitlich in der ersten Montagerichtung über den Pfosten übersteht. Ergänzend oder aber alternativ kann aber auch vorgesehen sein, dass das zweite Teil C-förmig ausgestaltet ist, insbesondere so, dass das zweite Teil in der finalen zweiten Montageposition über eine Außenkante des Pfostens nach innen übersteht. Hierdurch kann beispielsweise erreicht sein, dass das zweite Teil von oben durch axiales Verschieben in einer Längsrichtung bis in eine finale zweite Montageposition überführt werden kann, wobei in der zweiten Montageposition das zweite Teil mit dem ersten Teil mechanisch fest verbunden ist, insbesondere aufgrund eines hergestellten Formschlusses.

Der besagte Überstand, mit dem das erste Teil in der finalen ersten Montageposition über den Pfosten (quer zu seiner Längsrichtung) übersteht, hat bei einer PV-Anlage mit vertikal montierten bifazialen PV-Modulen den entscheidenden Vorteil, dass beim axialen Ein-/Aufschieben des zweiten Teils in/auf das erste Teil, das zweite Teil an den in der Modulebene angeordneten PV-Modulen vorbei geschoben werden kann, ohne mit diesen zu interferieren. Dies ermöglicht eine schnelle und vereinfachte Montage des Bewuchsschutzes an einer bereits installierten PV-Anlage, insbesondere dann, wenn die axiale Länge des Bewuchsschutzes mehr als die Hälfte der Höhe des Freiraums beträgt, der zwischen dem Erdreich und der untersten Modulreihe der PV-Anlage besteht. Denn in einem solchen Fall könnte das zweite Teil nicht mehr ohne weiteres unterhalb der untersten Modulreihe in das erste Teil eingeschoben werden, weil hierzu schlicht der Platz fehlt.

Die Breite der Öffnung des ersten Teils ist dabei bevorzugt so groß ausgestaltet, dass das erste Teil ohne elastische Verformung auf den Pfosten aufgeschoben werden kann; d.h. die Breite der Öffnung ist mindestens so groß gewählt wie die Breite des Pfostens in dem Bereich, der mittels des Bewuchsschutzes abgedeckt werden soll.

Hat das zweite Teil die finale zweite Montageposition erreicht, ist die umlaufende Außenwandung des Bewuchsschutzes vollständig ausgebildet.

Zwischen der jeweiligen Außenwandung des jeweiligen Bewuchsschutzes, der am jeweiligen Pfosten der PV-Anlage montiert ist und dem jeweiligen Pfosten kann, wie bereits erläutert wurde, ein Zwischenraum ausgebildet sein. Um nun eine axiale Positionierung des Bewuchsschutzes zu gewährleisten, ist es vorteilhaft, wenn der Zwischenraum mit einem Schüttgut, beispielsweise Kies- oder Splitt- oder Magerbeton, befüllt ist. Aufgrund der wegen des Schüttguts entstehenden Reibung zwischen der Außenkontur des Postens und der Innenkontur des Bewuchsschutzes wird mithilfe des Schüttguts sichergestellt, dass sich der Bewuchsschutz nicht mehr in axialer Richtung verschieben kann, sobald das Schüttgut in den Zwischenraum gefüllt ist. Dadurch wird eine einfache und robuste Befestigungsmöglichkeit geschaffen, die den Bewuchsschutz in der gewünschten Position hält.

Ein unterer Halteabschnitt des jeweiligen Pfostens der Tragkonstruktion kann, wie eingangs im Detail beschrieben wurde, in Form eines Rammprofils C-förmigen Querschnitts, ausgestaltet sein. Ein solches Rammprofil kann also seitlich eine Öffnung aufweisen und in das Erdreich eingerammt sein. Erfindungsgemäß ist es nun vorteilhaft, wenn der Bewuchsschutz gerade diese Öffnung des Rammprofils abdeckt. Denn dadurch kann verhindert werden, dass in der seitlichen Öffnung Pflanzen emporwachsen, die nur sehr schwer mittels größerer Mähwerkzeuge zu entfernen wären.

Zur Lösung der genannten Aufgabe sind erfindungsgemäß auch die Merkmale des unabhängigen Verfahrensanspruchs vorgesehen. Insbesondere wird somit erfindungsgemäß zur Lösung der Aufgabe bei einem Montageverfahren der eingangs beschriebenen Art vorgeschlagen, dass ein erstes Teil des Bewuchsschutzes quer zu einer Längsrichtung des Pfostens entlang einer ersten Montagerichtung auf den Pfosten bis in eine erste Montageposition aufgeschoben wird. Anschließend ist vorgesehen, dass ein zweites Teil des Bewuchsschutzes, vorzugsweise von oben (alternativ hierzu von unten) durch axiales Verschieben entlang einer Längsrichtung des Pfostens bis in eine finale zweite Montageposition überführt wird, wobei in der zweiten Montageposition das zweite Teil mit dem ersten Teil mechanisch fest verbunden ist, insbesondere aufgrund eines hergestellten Formschlusses.

Das axiale Verschieben kann also gerade quer zur ersten Montagerichtung (entlang einer zweiten Montagerichtung) erfolgen. Mit anderen Worten können die erste und die zweite Montagerichtung quer zueinander, insbesondere senkrecht zueinander, ausgerichtet sein.

Bei dem oben beschriebenen Verfahren kann auch vorgesehen sein, dass die Pfosten der PV-Anlage in beabstandeten Reichen angeordnet sind. Jede dieser Reihen definiert dann eine jeweilige vertikal verlaufende Modulebene, in welcher die PV-Module, genauer deren aktive Fläche, angeordnet sind. In einer solchen Konstellation ist es vorteilhaft, wenn das zweite Teil des Bewuchsschutzes an der Modulebene vorbei axial in die finale zweite Montageposition verschoben wird, sobald sich das erste Teil in der ersten Montageposition befindet. Denn dadurch kann auch der vertikale Bereich, der eigentlich durch die Modulebene belegt ist, bei der Montage des Bewuchsschutzes ausgenutzt werden. Dies ist besonders vorteilhaft, um einen erfindungsgemäßen Bewuchsschutz an einer bereits im freien Feld errichteten PV-Anlage nachzurüsten, ohne dazu beispielsweise die untersten Riegel der PV-Anlage demontieren zu müssen.

Ein Bewuchsschutz, der einfach an bereits im Erdreich verankerten Pfosten nachgerüstet werden kann, kann auch dadurch erhalten werden, wenn ein erstes Teil des Bewuchsschutzes auf den Pfosten seitlich aufgeschoben wird, wobei dieses erste Teil elastisch ausgestaltet sein kann, insbesondere sodass das erste Teil klemmend auf dem Pfosten aufsitzt. Anschließend kann ein zweites Teil durch seitliches Aufschieben oder Einschieben in das erste Teil mit dem ersten Teil mechanisch verbunden werden. Hierzu sind klemmende als auch einrastende Verbindungselemente denkbar, die eine mechanische Verbindung zwischen den beiden Teilen herstellen. Solche Ausgestaltungen sind aber in der Regel aufwändiger zu fertigen und erzielen in Bezug auf die mechanische Verbindung nicht dieselbe Festigkeit, wie die erfindungsgemäße Lösung, die ein axiales Ineinanderschieben/ Aufeinanderschieben der beiden Teile in der Längsrichtung des Pfostens vorsieht. Die Erfindung hat dabei erkannt, dass eine solche Art der Verbindung besser geeignet ist, um die beim Mähen seitlich auf den Bewuchsschutz einwirkenden Kräfte aufnehmen und so den Pfosten wirksam abschirmen zu können.

Die Erfindung wird nun anhand von Ausführungsbeispielen näher beschrieben, ist aber nicht auf diese Ausführungsbeispiele beschränkt. Weitere Ausbildungen der Erfindung können aus der nachfolgenden Beschreibung eines bevorzugten Ausführungsbeispiels in Verbindung mit der allgemeinen Beschreibung, den Ansprüchen sowie den Zeichnungen gewonnen werden.

Bei der folgenden Beschreibung verschiedener bevorzugter Ausführungsformen der Erfindung erhalten in ihrer Funktion übereinstimmende Elemente auch bei abweichender Gestaltung oder Formgebung übereinstimmende Bezugszahlen.

Es zeigt:
- Fig. 1: eine herkömmliche Photovoltaikanlage (PV-Anlage) mit mehreren parallel verlaufenden Reihen aus vertikal übereinander angeordneten bifazialen PV-Modulen,
- Fig. 2: eine Detailansicht auf eine Reihe der PV-Anlage aus Figur 1,
- Fig. 3: ein erstes Beispiel einer erfindungsgemäß ausgestalteten PV-Anlage, wobei eine Seitenansicht, teilweise als Schnittansicht, gezeigt ist
- Fig. 4: eine Seitenansicht auf die erfindungsgemäß ausgestaltete PV-Anlage der Figur 3,
- Fig. 5: eine Detailansicht auf einen Pfosten samt erfindungsgemäßem Bewuchsschutz der PV-Anlage der Figur 3,
- Fig. 6: eine Querschnittsansicht von oben auf den Pfosten samt erfindungsgemäßem Bewuchsschutz der Fig. 6,
- Fig. 7: eine Detailansicht von oben auf ein zweites Teil des Bewuchsschutzes aus Fig. 5 und Fig. 6,
- Fig. 8: eine Seitenansicht auf das zweite Teil der Fig. 7,
- Fig. 9: eine perspektivische Ansicht auf ein erstes Teil des Bewuchsschutzes aus Fig. 5 und Fig. 6,
- Fig. 10: eine perspektivische Ansicht auf das zweite Teil gemäß Fig. 7,
- Fig. 11: eine Detailansicht von oben auf das erste Teil gemäß Figur 9,
- Fig. 12: eine Seitenansicht auf das erste Teil gemäß Figur 9, und
- Fig. 13: eine Ansicht von oben, vergleichbar der der Figur 6, auf den vollständig assemblierten Bewuchsschutz, jedoch ohne Pfosten.

Figur 1 zeigt eine herkömmliche Photovoltaikanlage (PV-Anlage) 1 mit mehreren parallel verlaufenden Reihen aus vertikal übereinander angeordneten bifazialen PV-Modulen 2, die von einer Tragkonstruktion 3, die vertikal verlaufende Pfosten 4 und horizontal verlaufende Riegeln 24 umfasst, getragen werden. Solche PV-Anlagen 1 werden im Freien aufgestellt, wobei der freie Raum der zwischen den beiden Reihen besteht, aber auch der freie Raum, der unterhalb der untersten Reihe an horizontal verlaufenden Riegeln 24 besteht, landwirtschaftlich genutzt werden kann, weil die PV-Module vertikal ausgerichtet sind.

Fig. 2 zeigt eine detailliertere Ansicht einer Reihe der PV-Anlage 1 aus Figur 1: Man erkennt, dass die Pfosten 4 in einen bodenseitigen Befestigungsabschnitt 26 und einen damit verbundenen und darüber angeordneten Halteabschnitt 25 aufgeteilt sind. Beide Abschnitte 25 und 26 sind mittels metallischer Längsprofile realisiert, wobei der Befestigungsabschnitt 26 in Form eines C-förmigen Rammprofils 21 ausgestaltet ist, welches in das Erdreich 17 eingerammt wurde, um den Pfosten 4 im Erdreich 17 zu verankern. Man erkennt ferner, wie die einzelnen PV-Module 2 mittels jeweiliger Modulhalter 31 an den horizontal verlaufenden Riegeln 24 befestigt sind. Die in Figur 2 schraffiert dargestellte Fläche, die der aktiven Fläche der PV-Module entspricht, definiert dabei eine Modulebene 23 der Reihe der PV-Anlage 1.

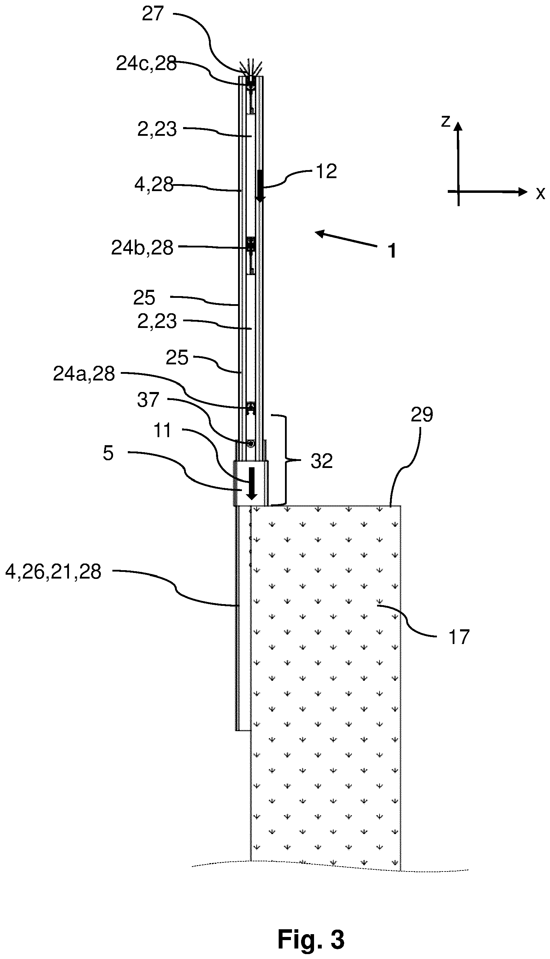

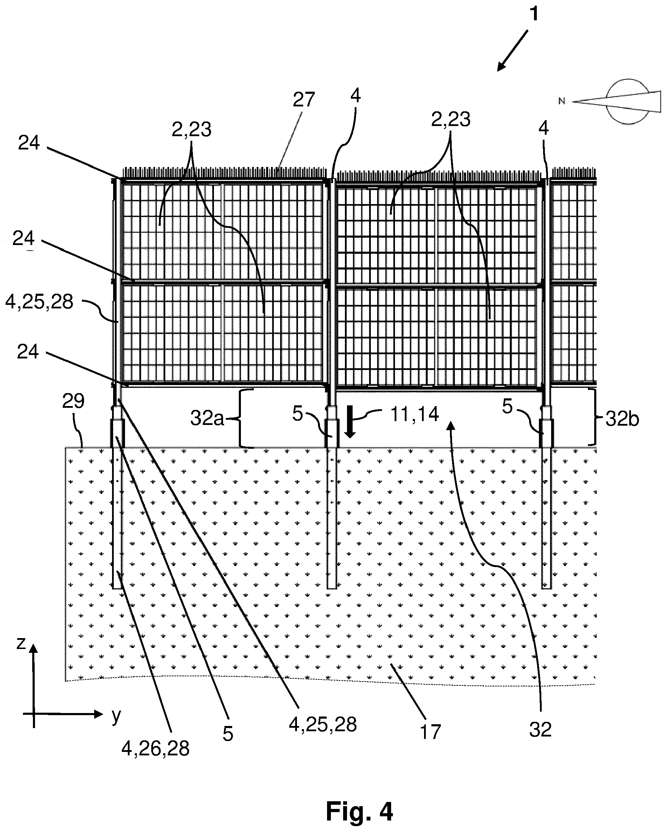

Die Figuren 3 und 4 zeigen ein erstes Beispiel einer erfindungsgemäß ausgestalteten PV-Anlage 1, wobei in Figur 3 der Blick von Süden in Längsrichtung der Reihe auf einen Pfosten 4 der Tragkonstruktion 3 der PV-Anlage 1 fällt. Man erkennt auch in Figur 3 wieder den unteren Befestigungsabschnitt 26 des Pfostens 4, der als Rammprofil 21 ausgestaltet ist und in das Erdreich 17 eingerammt ist. Der obere Halteabschnitt 25 des Pfostens 4 ist mittels einer Verschraubung 37 mit dem im Erdreich verankerten Befestigungsabschnitt 26 verbunden.

Oberhalb der Verschraubung 37 erkennt man in Figur 3 einen ersten untersten Riegel 24 in der Querschnittsansicht, wobei der Riegel 24a in Blickrichtung auf die Zeichnung verläuft. Darüber angeordnet befindet sich noch ein mittlerer Riegel 24b, sowie ein oberster Riegel 24c am oberen Ende des Pfostens 4, wo auch ein Vogelschutz 24 montiert ist.

In Figur 3 erkennt man auch gut, dass an dem Pfosten, genauer an dem Befestigungs-abschnitt 26, noch unterhalb des untersten Riegels 24, ein erfindungsgemäßer Bewuchsschutz 5 montiert ist. Der Bewuchsschutz 5 sitzt dabei auf der Erdoberfläche 29 auf und deckt in vertikaler Richtung einen Großteil des Befestigungsabschnitts 26 ab, der außerhalb des Erdreichs 17 liegt. Mit der geschweiften Klammer ist dabei ein Freiraum 32 angedeutet, der zwischen der Erdoberfläche 29 und dem untersten Riegel 24a besteht (vergleiche dafür insbesondere die Figur 1). In diesem Freiraum 32 wachsen Pflanzen, die regelmäßig gemäht werden müssen, um zu verhindern, dass die jeweilige Pflanze über den untersten Riegel 24a hinaus nach oben wächst und dann zu einer relevanten Verschattung der aktiven Fläche des untersten PV-Moduls 2 führt. Durch das Vorsehen des Bewuchsschutzes ist dieses Mähen wesentlich vereinfacht, weil einerseits die Gefahr gebannt werden kann, dass die Schneidwerkzeuge des Mähwerkzeugs die Metallprofile des Pfostens 4 beschädigen und weil andererseits der Bewuchsschutz 5 sicherstellt, dass Pflanzen sich nicht aus dem Freiraum 32 ausbreiten und bis in die seitliche Öffnung des C-förmigen Rammprofils 21 einwachsen, um dort, also innerhalb des Rammprofils 21 emporzuwachsen. Denn gerade diese Pflanzen wären besonders schwierig zu mähen, bzw. es wäre eine Beschädigung des Pfostens 4 zu befürchten.

Figur 4 bietet eine Ansicht von Westen auf die erfindungsgemäße PV-Anlage der Figur 3: Zu sehen sind drei Pfosten 4, die in einer Reihe aufgestellt sind, wobei durch die die Pfosten 4 verbindenden Riegel 24 jeweilige Montagefelder definiert sind, in denen die jeweiligen bifazialen PV-Module 2 angeordnet sind. Auch hier erkennt man den jeweiligen Freiraum 32, der je nach vertikaler Lage des untersten Riegels 24 mal mehr oder mal weniger hoch ausfallen kann.

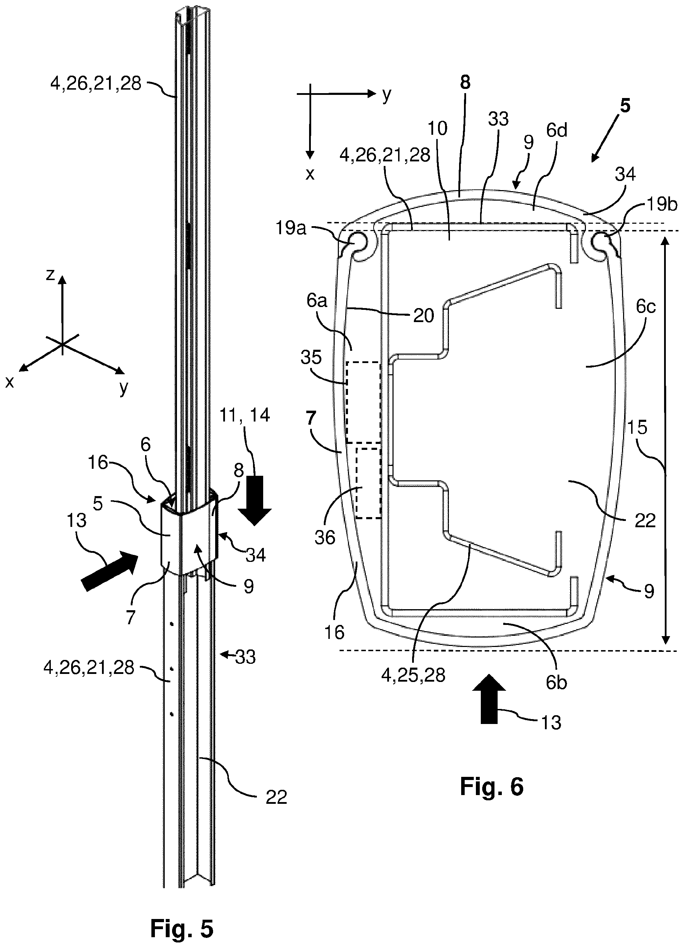

Fig. 5 zeigt einen einzelnen Pfosten 4, der Tragkonstruktion 3 der Figur 3/4 mit dem am unteren Befestigungsabschnitt 26 fertig montierten Bewuchsschutz 5.

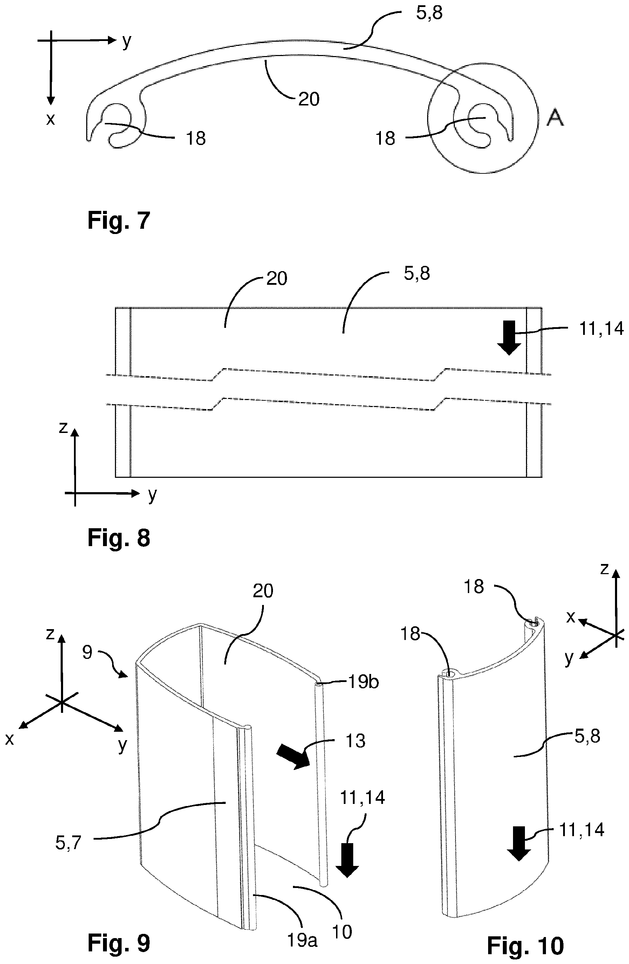

Wie Figur 6 illustriert, besteht der Bewuchsschutz aus einem ersten C-förmigen Teil 7 und einem zweiten Teil 8. Das erste Teil 7 weist dabei eine seitliche Öffnung 10 auf, die man auch gut an der perspektivischen Ansicht der Fig. 9 erkennt. Diese Öffnung 10 wird bei dem in Figur 5 und 6 gezeigten Ausgestaltungsbeispiel vollständig von dem zweiten Teil 8 verschlossen. Die seitliche Öffnung 10 ist dabei quer zu der in den Figuren 5 und 9 illustrierten Längsrichtung 11 des Bewuchsschutzes 5 orientiert. Dadurch kann das erste Teil 7 quer zur Längsrichtung 12 des Pfostens 4 entlang einer ersten Montagerichtung 13 (vergleiche Figur 9, als auch Figur 5) auf den Pfosten 4, genauer seinen unteren Befestigungsabschnitt 26, bis in die in Figur 5 illustrierte Montageposition 16 seitlich aufgeschoben werden. In dieser Situation umgreift das C-förmige erste Teil 7 somit, wie man in Figur 6 erkennt, den Pfosten 4 beidseitig. Anschließend kann dann das zweite Teil 8 des Bewuchsschutzes 5, z.B. von oben, axial entlang der Längsrichtung 12 des Pfostens 4 bzw. entlang der Längsrichtung 11 des Bewuchsschutzes 5 bis in eine finale zweite Montageposition 34 verschoben werden, die in Figur 5 und Figur 6 illustriert ist. In dieser finalen zweiten Montageposition 34 ist das zweite Teil 8 bei dem in Figur 6 gezeigten Beispiel auf das erste Teil 7 vollständig aufgeschoben und dadurch mechanisch mit dem ersten Teil 7 fest verbunden. Wie man in Figur 5 erkennt, verläuft die erste Montagerichtung 13 dabei quer zu der zweiten Montagerichtung 14.

Anhand der Figuren 5,6 sowie 9 und 10 kann man also gut nachvollziehen, dass das zweite Teil 8 in das erste Teil 7 entlang der Längsrichtung 11 des Bewuchsschutzes 5 aufgeschoben wurde, um so eine feste mechanische Verbindung zwischen den beiden Teilen 7 und 8 in der gezeigten finalen Montageposition des Bewuchsschutzes 5 am Pfosten 4 zu erzielen. Die beiden Teile sind dabei weiterhin voneinander lösbar, denn das zweite Teil 8 könnte bspw. entgegen der zweiten Montagerichtung 14 wieder aus dem ersten Teil 7 herausgezogen werden.

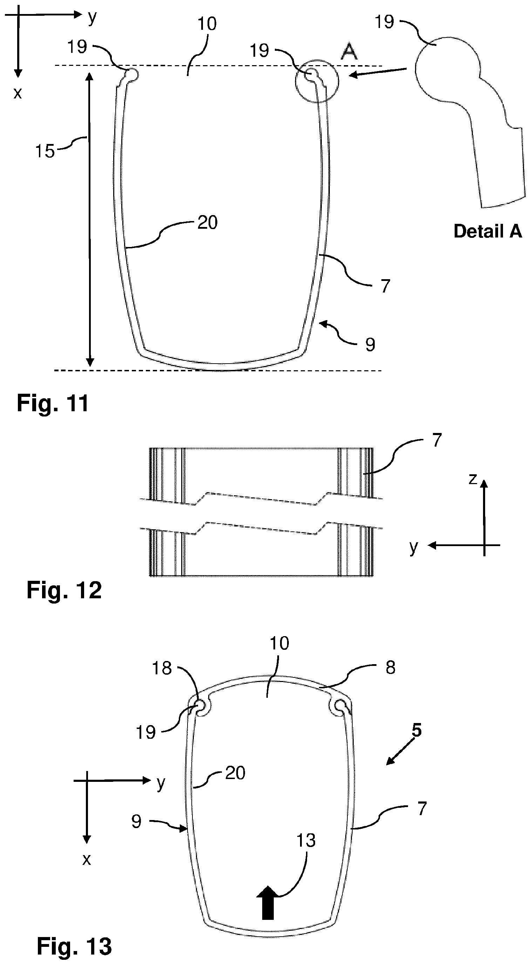

Anhand der Detailansicht A in Figur 7 und der Detailansicht A der Figur 11 (vergleiche auch Figur 13) ist aber gut zu erkennen, dass in der finalen Montageposition die beiden Teile 7 und 8 formschlüssig miteinander verbunden sind, und zwar insbesondere quer zu der zweiten Montagerichtung 14.

Wie die Figuren 5 und 6 zeigen, bilden die beiden Teile 7 und 8 in der finalen Montageposition eine vollständig um den Pfosten 4 umlaufende Außenwandung 9 des Bewuchsschutzes 5 aus. In Figur 6 erkennt man gut, dass die Außenwandung 9 geschlossen umlaufend und mit durchweg konvexer Form ausgestaltet ist. Dies stellt sicher, dass beispielsweise Gräser, die in unmittelbarer Nähe des Bewuchsschutzes 5 an der Außenwandung 9 emporwachsen vollständig mit einem Mähwerkzeug entfernt werden können.

Wie das Detail A der Figur 7 zeigt, bildet bei dem gezeigten Ausführungsbeispiel das zweite Teil 8 eine Aufnahme 18 aus, in die die dazu passend ausgestaltete Einführnase 19 des ersten Teils 7 entlang der Längsrichtung 11 eingeführt werden kann. Hierzu kann man die Figur 5 betrachten und sich vorstellen, dass dort das zweite Teil 8 zuvor entlang der illustrierten zweiten Montagerichtung 14 auf das erste Teil 7 in der Längsrichtung 11 aufgeschoben wurde. Anhand des Details A der Figur 11 erkennt man dabei gut, dass die jeweilige Einführnase 19 abgerundet ausgestaltet ist, um ein Verkanten beim Einführen in die Aufnahme 18 zu vermeiden. Bei dem Beispiel der Figur 6 erkennt man gut den C-förmigen Querschnitt des ersten Teils 7 mit den beiden freien 19 a und 19 b, die auch gut in Figur 9 zu sehen sind.

Nicht in den Figuren gezeigt, aber einfach vorstellbar ist, dass auf der Innenseite des Bewuchsschutzes eine Kabelführung 36 (etwa wie in Figur 6 angedeutet) ausgestaltet werden kann, in welcher elektrische Stromkabel entlang der Längsrichtung 12 des Pfostens 4 von dem Bewuchsschutz 5 geschützt entlanggeführt werden können. Der verbleibende Zwischenraum 6 zwischen der Außenseite des Pfostens 4 und der Innenwandung des Bewuchsschutzes 5 kann dabei beispielsweise mit einem Schüttgut ausgefüllt werden, um eine solide Befestigung des Bewuchsschutzes 5 in der finalen Montageposition am Pfosten 4 zu erreichen. Entscheidend zur Vermeidung von Verschattungen der PV-Module ist dabei aber vor allem, dass der Bewuchsschutz 5, genauer dessen umlaufende Außenwandung 9 die seitliche Öffnung 22 abdeckt, die das C-förmige Rammprofil 21 ausbildet (vergleiche Figur 5 und Figur 6). In dieser seitlichen Öffnung 22 bzw. diesem Freiraum befindet sich zumindest teilweise der obere Halteabschnitt 25 des Pfostens 4, es verbleibt aber ein erheblicher Zwischenraum 6c (vergleiche Figur 6) in dem potentiell Pflanzen nach oben empor wachsen könnten. Dies kann durch Befüllung dieses Zwischenraumes 6c mit einem Schüttgut aber effektiv verhindert werden.

In Figur 6 erkennt man auch gut, dass zur Vereinfachung der Montage und genauen Festlegung der relativen Position zwischen Bewuchsschutz 5 und dem Pfosten 4 der Bewuchsschutz 5 wenigstens einen Abstandshalter 35 (beispielsweise gebildet durch ein Elastomerelement) aufweisen kann. Zudem kann der Bewuchsschutz 5 auch eine Befestigungsaufnahme aufweisen, in die dann ein unter Umständen mehrteiliges Verankerungselement eingeführt werden kann, um so den Bewuchsschutz 5 im Erdreich 17 zu verankern.

In Figur 6 erkennt man, dass das zweite Teil 8, welches ebenfalls C-förmig ausgestaltet ist, über eine Außenkante 33 des Pfostens 4 (die parallel zur Modulebene verläuft) nach innen übersteht. Dadurch kann nämlich das zweite Teil 8 von oben durch axiales Verschieben in der Längsrichtung 12 des Pfostens 4 bis in die finale zweite Montageposition 34 überführt werden, in der das zweite Teil 8 wie in Figur 5 gezeigt mechanisch fest mit dem ersten Teil 7 verbunden ist.

Der Bewuchsschutz kann auch so dimensioniert sein, dass das zweite Teil 8 an der Modulebene 23 vorbei axial in die finale zweite Montageposition 34 verschoben werden kann, sobald sich das erste Teil 7 in der in Figur 5 illustrierten ersten Montageposition 16 befindet, also nachdem das erste Teil 7 quer zur Längsrichtung 12 des Pfostens 4 auf den Pfosten 4 aufgeschoben wurde.

Es sei noch abschließend angemerkt, dass sich ein erfindungsgemäßer Bewuchsschutz auch dazu eignet, andere Anlageteile wie beispielsweise in vertikaler Richtung verlaufende Kabel (insbesondere unabhängig von einem Pfosten der Tragkonstruktion) zu schützen, um auch bei solchen Anlagenteilen eine effiziente Pflege der PV-Anlage, insbesondere ein effizientes Mähen, zu ermöglichen.

Zusammenfassend wird zur vereinfachten Pflege einer Photovoltaik-Anlage 1 ein mehrteiliger Bewuchsschutz 5 vorgeschlagen, der nachträglich an Anlagenteilen der PV-Anlage 1, wie beispielsweise Pfosten 4 oder Kabeln, montiert werden kann, um diese Anlagenteile vor dem Einwirken eines Schneidwerkzeugs eines Mähwerkzeuges zu schützen und zudem vor dem Bewuchs von Pflanzen, die in unmittelbarer Nähe des Anlagenteils im Erdreich 17 nach oben wachsen. Der erfindungsgemäße Bewuchsschutz 5 kann dabei in einer für PV-Anlagen 1 optimierten Montage einfach an bestehenden PV-Anlagen 1 nachmontiert werden (vergleiche Figur 4).

### Bezugszeichenliste

- 1: Photovoltaikanlage
- 2: Photovoltaikmodul
- 3: Tragkonstruktion (von 1 zum Tragen von 2)
- 4: Pfosten (von 3)
- 5: Bewuchsschutz (zum Abschirmen von 4 gegenüber Bewuchs)
- 6: Zwischenraum (zwischen 4 und 5)
- 7: erstes Teil (von 5 - wird quer auf den 4 aufgeschoben)
- 8: zweites Teil (von 5 - wird in Längsrichtung von 4 auf/in 7 geschoben)
- 9: Außenwandung (gebildet durch 5 bzw. 7 und 8; läuft um 4 um)
- 10: Öffnung (ausgebildet durch 7)
- 11: Längsrichtung (von 5)
- 12: Längsrichtung (von 4)
- 13: erste Montagerichtung (Richtung in der 7 auf 4 aufgeschoben wird bei der Montage)
- 14: zweite Montagerichtung (Richtung in der 8 in 7 eingeschoben bzw. auf 7 aufgeschoben werden kann, um eine mechanische Verbindung zwischen 7 und 8 auszubilden).
- 15: Länge (von 10 gemessen in Richtung von 13)
- 16: erste Montageposition (von 7)
- 17: Erdreich
- 18: Aufnahme
- 19: Einführnase bzw. freies Ende (von 7)
- 20: Innenwandung (von 5)
- 21: Rammprofil
- 22: seitliche Öffnung (von 21)
- 23: Modulebene
- 24: Riegel (verbinden 4 miteinander)
- 25: Halteabschnitt
- 26: Befestigungsabschnitt
- 27: Vogelschutz
- 28: Längsprofil
- 29: Erdoberfläche
- 30: Freifläche (kann für landwirtschaftliche Bewirtschaftung genutzt werden)
- 31: Modulhalter
- 32: Freiraum (zwischen 3 und 29)
- 33: Außenkante (von 4, parallel verlaufend zu 23)
- 34: zweite Montageposition (von 8)
- 35: Abstandshalter
- 36: Kabelführung
- 37: Verschraubung

## Patentansprüche

1. **Bewuchsschutz** (5) zum Abschirmen von Anlagenteilen, insbesondere zum Abschirmen eines Pfostens (4) einer Tragkonstruktion (3) einer im freien Feld errichteten Photovoltaikanlage (1), vorzugsweise ausgestaltet gemäß Anspruch 9, von Pflanzen, die im Erdreich (17) in der Nähe des Pfostens (4) wachsen, **dadurch gekennzeichnet,**
- **dass** der Bewuchsschutz (5) ein erstes Teil (7) und ein zweites Teil (8) umfasst, die miteinander verbunden sind,
- **dass** das erste Teil (7) eine seitliche Öffnung (10) aufweist, die mit dem zweiten Teil (8) zumindest teilweise verschlossen werden kann und die quer zu einer Längsrichtung (11) des Bewuchsschutzes (5) orientiert ist,
- und **dass** das zweite Teil (8) in das erste Teil (7) entlang der Längsrichtung (11) des Bewuchsschutzes (5) eingeschoben und/oder auf das erste Teil (7) aufgeschoben werden kann, um so eine Verbindung zwischen den beiden Teilen (7, 8) in einer finalen Montageposition des Bewuchsschutzes (5), insbesondere an einem Pfosten (4), herzustellen.

2. Bewuchsschutz (5) nach Anspruch 1, wobei die beiden Teile (7, 8) lösbar, vorzugsweise und formschlüssig, miteinander verbunden sind,
- vorzugsweise wobei das zweite Teil (8)
- entgegen einer zweiten Montagerichtung (14) aus dem ersten Teil (7) herausgezogen und/oder abgezogen werden kann und/oder
- in einer finalen Montageposition aufgrund des Formschlusses quer zu der zweiten Montagerichtung (14) von dem ersten Teil (7) in Position gehalten bleibt.

3. Bewuchsschutz (5) nach einem der vorhergehenden Ansprüche, wobei die beiden Teile (7, 8) in der finalen Montageposition, insbesondere am Pfosten (4), eine umlaufende Außenwandung (9) des Bewuchsschutzes (5) ausbilden,
- insbesondere wobei die Außenwandung (9) geschlossen umlaufend und/oder mit durchweg konvexer Form ausgestaltet ist,
- vorzugsweise derart, dass in der finalen Montageposition, zum Beispiel an einem Pfosten (4), Pflanzen, die in unmittelbarer Nähe des Bewuchsschutzes (5) empor wachsen, vollständig mit Hilfe eines Mähwerkzeugs entfernt werden können.

4. Bewuchsschutz (5) nach einem der vorhergehenden Ansprüche, wobei der Bewuchsschutz (5) in der Längsrichtung (11) wenigstens 10 cm, vorzugweise wenigstes 25 cm, hoch ist und/oder
- wobei der Bewuchsschutz (5) in der Längsrichtung (11) wenigstens so lang ist als der Bewuchsschutz (5) quer zur Längsrichtung (11) breit ist.

5. Bewuchsschutz (5) nach einem der vorhergehenden Ansprüche, wobei das erste Teil (7) und/oder das zweite Teil (8) eine Aufnahme (18) ausbilden, in die eine Einführnase (19) des jeweils anderen Teils (8/7) entlang der Längsrichtung (11) einführbar ist,
- insbesondere sodass die jeweilige Einführnase (19) nach dem Einführen in seitlicher Richtung in der Aufnahme (18) verankert ist und so ein Formschluss zwischen den beiden Teilen (7, 8) ausgebildet werden kann,
- vorzugsweise wobei die Einführnase (19) und/oder die Aufnahme (18) einen nicht-eckigen / abgerundeten Querschnitt zeigt, um ein Verkanten beim Einführen zu vermeiden.

6. Bewuchsschutz (5) nach einem der vorhergehenden Ansprüche, wobei das erste Teil (7) quer zu seiner Längsrichtung (11) einen C-förmigen Querschnitt aufweist mit zwei freien Enden (19a, 19b),
- insbesondere wobei das zweite Teil (8) auf die beiden freien Enden (19a, 19b) aufgeschoben und/oder in diese eingeschoben werden kann.

7. Bewuchsschutz (5) nach einem der vorhergehenden Ansprüche, wobei der Bewuchsschutz (5) eine Kabelführung (36), insbesondere ausgestaltet als ein Kabelkanal, aufweist, die innerhalb der/einer Außenwandung (9) des Bewuchsschutzes (5) angeordnet ist, vorzugsweise sodass in einer finalen Montageposition die Kabelführung (36) in einem Zwischenraum (6) zwischen Pfosten (4) und Bewuchsschutz (5) angeordnet ist.

8. Bewuchsschutz (5) nach einem der vorhergehenden Ansprüche, wobei der Bewuchsschutz (5) wenigstens einen Abstandshalter (35), vorzugsweise wenigstens zwei gegenüberliegende Abstandshalter (35), aufweist, die in der finalen Montageposition, beispielsweise am Pfosten (4), einen Zwischenraum (6) zwischen einer Innenwandung (20) des Bewuchsschutzes (5) und dem zu schützenden Anlagenteil/Pfosten (4) und/oder einen Abstand zwischen der Innenwandung (20) und dem zu schützenden Anlagenteil/Pfosten (4) definieren können, und/oder
- wobei der Bewuchsschutz (5) wenigstens eine Befestigungsaufnahme aufweist, in die ein, insbesondere mehrteiliges, Verankerungselement, beispielsweise ein Erdnagel oder ein Erdhering, insbesondere mit zugehörigem ersten Befestigungsteil, einführbar ist.

9. **Photovoltaikanlage (1)** mit mehreren Photovoltaikmodulen (2), die an einer Tragkonstruktion (3) angeordnet sind, wobei die Tragkonstruktion (3) Pfosten (4) aufweist, die im Erdreich (17) verankert sind, **dadurch gekennzeichnet,**
- **dass** an wenigstens einzelne der Pfosten (4) jeweils ein Bewuchsschutz (5) gemäß einem der vorherigen Ansprüche montiert ist.

10. Photovoltaikanlage (1) gemäß dem vorherigen Anspruch, wobei die seitliche Öffnung (10) des ersten Teils (7) so dimensioniert ist, dass das erste Teil (7) quer zu einer Längsrichtung (12) des jeweiligen Pfostens (4) entlang einer ersten Montagerichtung (13) auf den Pfosten (4) bis in eine finale erste Montageposition (16) aufgeschoben werden kann,
- vorzugsweise wobei eine Länge (15) des ersten Teils (7) so groß gewählt ist, dass das erste Teil (7) in der finalen ersten Montageposition (16) seitlich in der ersten Montagerichtung (13) über den Pfosten (4) übersteht und/oder
- wobei das zweite Teil (8) C-förmig ausgestaltet ist, insbesondere sodass das zweite Teil (8) in der finalen zweiten Montageposition (34) über eine Außenkante (33) des Pfostens (4) nach innen übersteht,
- insbesondere sodass das zweite Teil (8) von oben durch axiales Verschieben in einer Längsrichtung (12) des Pfostens (4) bis in eine finale zweite Montageposition (34) überführt werden kann, in der das zweite Teil (8) mit dem ersten Teil (7) mechanisch fest verbunden ist.

11. Photovoltaikanlage (1) nach einem der beiden vorhergehenden Ansprüche, wobei jeweils zwischen einer Außenwandung (9) des Bewuchsschutzes (5) und dem jeweiligen Pfosten (4) ein Zwischenraum (6) gebildet ist und der Zwischenraum (6) mit einem Schüttgut, beispielsweise Kies, Splitt oder Magerbeton, befüllt ist.

12. Photovoltaikanlage (1) nach einem der Ansprüche 9 bis 11, wobei ein unterer Halteabschnitt (25) des jeweiligen Pfostens (4) in Form eines Rammprofils (21), insbesondere mit C-förmigen Querschnitt, ausgestaltet ist, welches seitlich ein Öffnung (22) aufweist und welches in das Erdreich (17) eingerammt ist, und wobei der Bewuchsschutz (5) die Öffnung (22) des Rammprofils (21) abdeckt.

13. **Verfahren zur Montage eines mehrteiligen Bewuchsschutzes (5),** insbesondere gemäß einem der Ansprüche 1 bis 8, an einem bereits im Erdreich (17) verankerten Pfosten (4) einer Tragkonstruktion (3) einer Photovoltaikanlage (1), insbesondere gemäß einem Ansprüche 9 bis 12,
**dadurch gekennzeichnet,**
- **dass** ein erstes Teil (7) des Bewuchsschutzes (5) quer zu einer Längsrichtung (12) des Pfostens (4) entlang einer ersten Montagerichtung (13) auf den Pfosten (4) bis in eine erste Montageposition (16) aufgeschoben wird, und
- **dass** ein zweites Teil (8) des Bewuchsschutzes (5) anschließend, vorzugsweise von oben, durch axiales Verschieben entlang einer Längsrichtung (12) des Pfostens (4) bis in eine finale zweite Montageposition (34) überführt wird, in der das zweite Teil (8) mit dem ersten Teil (7) mechanisch fest verbunden ist.

14. Verfahren gemäß dem vorhergehenden Anspruch, wobei die Pfosten (4) der Photovoltaikanlage (1) in beabstandeten Reihen angeordnet sind, die eine jeweilige vertikal verlaufende Modulebene (23) definieren, in welcher Photovoltaikmodule (2) angeordnet sind, und wobei das zweite Teil (8) an der Modulebene (23) vorbei axial in die finale zweite Montageposition (34) verschoben wird, sobald sich das erste Teil (7) in der ersten Montageposition (16) befindet.
